# EUROPEAN PATENT SPECIFICATION

(11) **EP 0 728 316 B1**
(45) Date of publication and mention of the grant of the patent: **13.02.2002**
(21) Application number: 94920321.0
(22) Date of filing: 21.06.1994
(51) Int. Cl.: G02B 23/12, F41G 3/16

(54) **MONOCULAR NIGHT VISION DEVICES**
MONOKULARE NACHTSICHTVORRICHTUNG
DISPOSITIFS DE VISION DE NUIT MONOCULAIRES

(30) Priority: 12.11.1993 US 152193
(43) Date of publication of application: 28.08.1996
(60) Divisional application: 01113335.2
(73) Proprietor: ITT MANUFACTURING ENTERPRISES, INC., Wilmington, Delaware 19801 (US)
(72) Inventor: PALMER, Gary, L., Vinton, Virginia 24179 (US)
(74) Representative: Esser, Wolfgang
(86) International application number: PCT/US94/07229
(87) International publication number: WO 95/13551

(56) References cited:
- JP-A- 62 125 307
- US-A- 4 655 562
- US-A- 4 971 429
- US-A- 5 084 780
- US-A- 5 214 533
- US-S- D 300 038

## Description

### RELATED APPLICATIONS

The assignee herein, ITT Corporation, is the record owner of U.S. Patent Application 08/108,989 filed by the present inventor on August 18, 1993, entitled NIGHT VISION BINOCULARS, and which has given rise to the US Patents 5,495,364 ; 5,537,261 ; 5,847,868 and to the document WO 9505618.

### TECHNICAL FIELD OF THE INVENTION

The present invention relates to optical devices that enable a viewer to observe objects at night or during other low-light conditions. More particularly, the present invention relates to a handheld monocular system that can be manufactured at low cost for sale to the general public.

### BACKGROUND ART

Night vision devices are widely used in the military to provide soldiers. aviators and sailors with the ability to view objects at night or during other low light conditions. As a result, many night vision devices are currently being manufactured according to exacting military specifications and designs. Similarly, many such night vision devices are being manufactured for specific military applications such as part of the sights of various weapons or as part of goggle assemblies that attach to an aviator's or soldier's helmet. As a consequence, many of the night vision devices currently being manufactured are neither affordable nor easily adapted to non-military uses by the general public.

Night vision devices typically include an image intensifier tube that converts infrared energy into visible light. Such night vision devices typically require sophisticated power supplies and circuitry to control the operation of the image intensifier tube and sophisticated optical arrangements that direct the infrared energy into the image intensifier tube and visible light away from the image intensifier tube. In military applications, the various military personnel are trained in how to use and adjust the night vision devices they are issued. However, a night vision device designed for use by the general public would have to provide simple adjustments that can be readily operated by a variety of different environment. Furthermore, a night vision device designed for use by the general public would also require various adjustable optical characteristics that would be easy to operate and adjust. Such a consumer oriented night vision device would have wide ranging application in regard to nighttime marine piloting, nighttime security, surveillance, hunting, fishing, backpacking, navigation, underwater vision, search and rescue and law enforcement.

ITT Corporation, the assignee herein, manufactures many night vision devices for various applications. Night vision devices for military applications are exemplified by U.S. Patent No. 5,084,780 to Phillips entitled TELESCOPIC SIGHT FOR DAY/NIGHT VIEWING and U.S. Patent No. 5,029,963 to Naselli entitled REPLACEMENT DEVICE FOR A DRIVER'S VIEWER ITT Corporation also has designed handheld night vision binoculars devices. Such a binocular device is exemplified in U.S. Patent Application No. 07/954,006, entitled CONSUMER NIGHT VISION VIEWING APPARATUS and filed on September 30, 1992. In this application, a night vision binocular device is disclosed having simplified adjustment controls, interpupillary adjustments and diopter cell focus adjustments. Related optical components that can be utilized in the construction of night vision binocular devices are shown in U.S. Patent Application No. 08/039,755 entitled DIOPTER CELL ASSEMBLY FOR A BINOCULAR VIEWING SYSTEM, and U.S. Patent No. 5,157,553, entitled COLLIMATOR FOR A BINOCULAR VIEWING SYSTEM, both of which are assigned to the assignee herein. These references show a diopter cell design and a collimator lens assembly for night vision binoculars, respectively. The assignee holds many other patents and applications related to image intensifier tubes and related devices which are of interest in regard to the present subject matter.

As has been previously mentioned, an important application for publicly available night vision devices will be for use in hunting, fishing, backpacking and other outdoor activities. These outdoor settings are less than ideal for a sophisticated electro-optical device such as a handheld night vision instrument. To survive in such an environments, the night vision instrument must be capable of withstanding large temperature changes, impacts, and must be designed to withstand damage from rain, high humidity, as well as the possibility of being dropped into the water. To be suitable for use by plant security and law enforcement personnel surveillance activities, such a device must also be lightweight for continuous use and dark colored to prevent detection.

It is therefore the object of the present invention to provide a night vision device that is easy to hold, easy to operate, water proof and provides the same performance as military night vision devices at a greatly reduced cost.

It is a further object of the present invention to provide component parts for the above-mentioned night vision device that are easy to manufacture and assembly, thereby further reducing the cost of manufacturing the night vision device.

### DISCLOSURE OF THE INVENTION

The present invention is a monocular night vision assembly as defined in claim 1. It is capable of converting low intensity light and infrared energy into a visible image and is manufactured in a manner that promotes both ease of use and ease of assembly. The monocular night vision assembly includes an objective lens assembly, image intensifier tube, collimator lens assembly and diopter cell assembly encased in an easy to assemble, partitioned, waterproof housing. The objective lens assembly, image intensifier tube, collimator lens assembly and diopter cell assembly are each placed between in a respective pair of partitions to establish a folded optical path. Thus, a predetermined optical relationship of the various components is achieved without the need for skilled labor or special alignment adjustments. The exterior of the housing is contoured so that the device may be easily grasped and comfortably held by the user while in use.

The primary optical elements of the monocular night vision device are retained between respective partitions within the housing without the need for mechanical fasteners. Moreover, the housing can be assembled to be water tight without the use of a gasket. A surface mounted, on/off button disposed on a circuit board within the housing is used to operate the monocular night vision assembly. A reciprocably mounted objective lens is utilized to permit the user to selectively focus upon any object in the vision field. If magnification is required, the objective lens may be optionally configured as a zoom lens. Accordingly, the monocular night vision device of the present invention can be manufactured and assembled in a highly reliable and cost efficient manner, thereby making the same affordable to the general consuming public.

### BRIEF DESCRIPTION OF THE DRAWINGS

FIG. 1 is a side perspective view of a monocular night vision device constructed in accordance with an illustrative embodiment of the present invention;
FIG. 2 is a side perspective of the embodiment FIG. 1 having a supplemental magnification lens coupled thereto;
FIG. 3 is an exploded view depicting the interior details and two-piece construction of the housing utilized to retain and protect the various electronic and optical components of the illustrative device of FIG. 1;
FIG. 4a is a cross-sectional view of mating sections of the housing of the illustrative embodiment prior to assembly;
FIG. 4b is a cross-sectional view of the mating sections of the housing depicted in FIG. 4a after assembly thereof;
FIG. 5 is a perspective view of the device of FIG. 1 with one of the housing sections removed to show a preferred internal arrangement of electro-optical components therewithin;
FIG. 6 is a full elevation view of the device of FIG. 1 with one of the housing sections removed to show the location of partitions for supporting the electro-optical components in the preferred arrangement depicted in FIG. 5;
FIG. 7 is an exploded view of a diopter cell subassembly contained within the night vision device of FIG. 1;
FIG. 8a is an exploded view depicting the various components of the eyepiece utilized by the night vision device of FIG. 1;
FIG. 8b is a perspective view of the completed eyepiece assembly utilized by the night vision device of FIG. 1;
FIG. 9a is an exploded view of the components of the collimator assembly contained within the night vision device of FIG. 1;
FIG. 9b is a perspective view of the completed collimator assembly contained within the night vision device of the FIG. 1;
FIG. 10 is a cross-sectional view of the image intensifier tube contained within the monocular night vision device of FIG. 1.

### BEST MODE FOR CARRYING OUT THE INVENTION

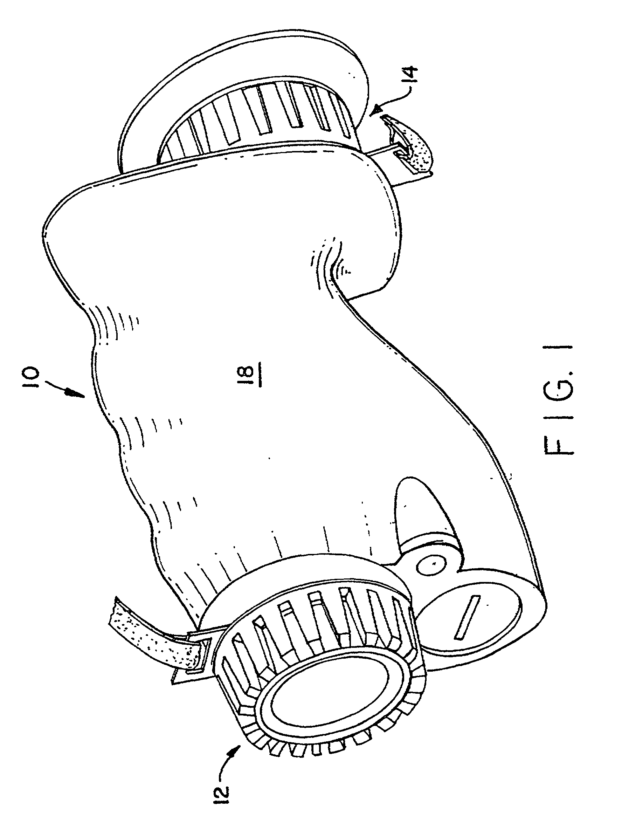

Referring to FIG. 1, there is shown an illustrative embodiment of a monocular night vision device constructed in accordance with the present invention. As will be explained, the night vision device 10 includes an objective lens assembly 12 having a single objective lens for receiving infrared and low intensity light and a single lens eye piece assembly 14 for viewing a visible image created from the received light.

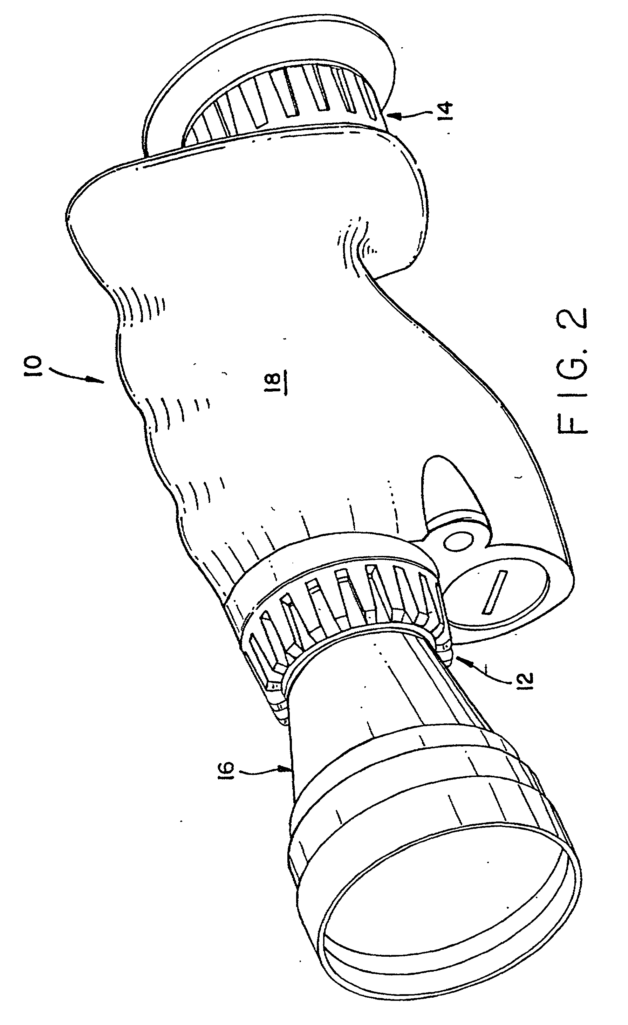

In accordance with an illustrative embodiment of the present invention, night vision device 10 is manufactured with one set power of magnification. As shown in FIG. 2, the night vision device 10 may be further provided with a supplemental magnification lens 16 to increase the power of magnification. For instance, device 10 may come with an initial power of magnification of 3X, however when supplemental magnification lens 16 is added, the power of magnification may be increased to 8X. The magnification lens may be coupled to device 10 in any conventional manner. For example, supplemental magnification lens 16 may be provided with a threaded end (not shown) receivable in a corresponding threaded bore in the objective lens assembly 12. Such interconnections systems are well known for joining telephoto lenses to cameras and any such know interconnection system may be employed. Alternatively, interference fit connections or other such mechanical interconnection systems may also be employed.

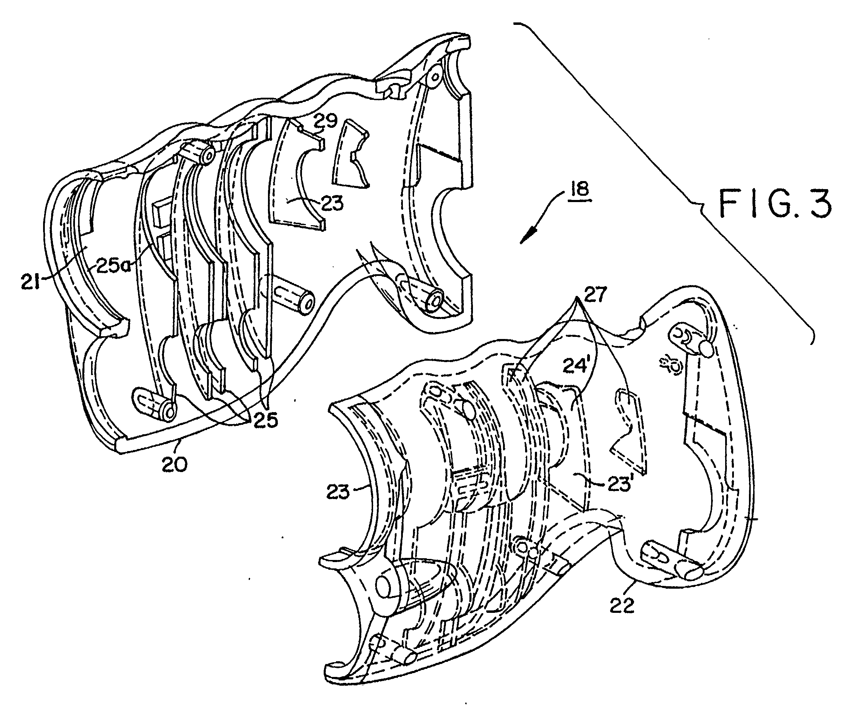

Returning again to FIG. 1, it will be recalled that an important objective of the present invention is to provide a monocular night vision device capable of withstanding large temperature changes, high humidity environments and the possibility of being dropped into the water. Accordingly, the optical and electronic components of the night vision monocular 10 are preferably encased in a waterproof housing 18. As most clearly shown in FIG. 3, housing 18 is preferably of two-piece construction and includes a first half or section 20 and a second half or section 22 that will be joined together by a fluid impermeable seal (not shown) formed about the peripheral edges of sections 20 and 22 when the sections are coupled together. The interior surface of each of sections 20, 22 is provided with a plurality of contoured partitions, 25 and 27, respectively. When sections 20 and 22 are joined together, each respective partition of the first section is aligned with a corresponding partition of the second section, thereby defining pairs of opposing support surfaces for receiving the various electro-optical components and retaining them in a predetermined optical relationship. As will be readily ascertained by those skilled in the art, such an arrangement permits the various components to be assembled quickly, even by unskilled laborers, without the use of mechanical fasteners, specialized tools or measuring devices.

Housing 18 is preferably made of a material that is highly impact resistant, corrosion resistant and light weight. An example of such a material is XENOY® PC/PBT resin alloy, a thermoplastic material supplied by the General Electric Company via the GE Plastics Division. Polyester bond urethanes, such as General Electric's XENOY® 2000 & 5000 Series have also been found to be adequate materials for forming the housing of the present invention. It will, however, be readily appreciated by those skilled in the art that any suitable material possessing the desired properties of light weight and impact and corrosion resistance may be utilized in accordance with the present invention. Because of the possibility that the device may be utilized to conduct hunting, surveillance, or other activities in which the user wishes to conceal his presence, housing 18 is preferably black or some other dark color. It will, of course, be readily ascertained that the housing may be of a lighter color or utilize reflective markings for applications in which easy retrieval is a more important consideration than undetected viewing.

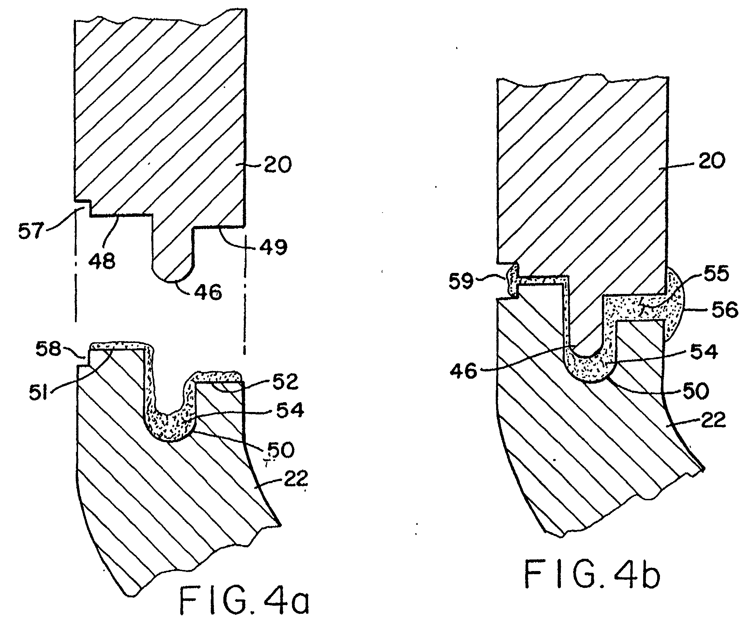

As can be seen from FIG. 3, first section 20 and second section 22 of housing 18 join together along a complex peripheral path which path is defined by the peripheral edge of the corresponding openings of the housing sections 20 and 22. However, it is necessary to join the housing sections 20 and 22 together to create a fluid impermeable seal along the resulting joint (not shown). Such a seal may be accomplished through the use of a suitably shaped gasket placed between housing sections 20 and 22. However, due to the complex shape of the peripheral edges, a gasket that would operate to join and seal the edges would be expensive to manufacture and highly labor intensive to install. Thus, in accordance with the present invention, the use of a gasket is avoided by utilizing an inner seal formation between the housing sections as shown in FIGS. 4a and 4b.

With reference to FIG. 4a, it will be seen that the peripheral edge of housing section 20 is formed with a depending peripheral projection 46 while the corresponding edge of housing section 22 is provided with a correspondingly shaped peripheral groove 50. As will be readily ascertained, both the projection 46 and groove 50 are specially shaped to receive a suitable adhesive enabling an inner peripheral housing seal to be formed to thus provide a waterproof seal between the first and second housing sections without the need for a gasket. Thus, in FIG. 4a, there is shown a section of first half 20 of housing 18 just prior to its being inserted into the corresponding groove of the second half 22 of the housing 18. As can be seen, the bottom surfaces 48, 49 on either side of projection 46 lay in two different planes, with the bottom surface 48 proximate the exterior of the housing being higher than the bottom surface 49 proximate the interior of the housing. The top surfaces 51, 52 on either side of the groove 50 also lay in two different planes with the top surface 51 proximate the exterior of the housing being higher than the top surface 52 proximate the interior of the housing. For a purpose which will later be explained, groove 50 is dimensioned to be significantly wider and deeper than projection 46.

Prior to joining of the first and second housing sections, an adhesive 54 is applied within the groove 50 of the lower section 22. The adhesive 54 selected must bond to the thermoplastic material of the housing 18 and cure to become water impermeable. A suitable and preferable adhesive contains methyl acrylate as a component which can be applied and employed similar to an epoxy using an activator which is mixed with the adhesive material. Such materials are available from ITW adhesive systems, of 30 Endicatt Street, Danvers, Massachusetts 01923. There are other adhesives which will operate as well. The adhesive has to be relatively viscous and hence not pour but act as an epoxy as being thick so it can be extruded to form the seal.

Referring now to FIG. 4b, it will be observed that when projection 46 of housing section 20 is received within groove 50 of housing section 22, a larger gap 55 is created proximate the interior of the housing than is created proximate the exterior of housing. As a result, the adhesive 54 presents between section 20 and 22 is directed toward the inside of the housing structure. Excess adhesive that is extruded from the joint creates a bead 56 on the inside of the housing. The bead 56, created by the surface tension of the adhesive 54, covers the entire joint along the inside of the housing 18. Notches 57, 58 are disposed on housing sections 20 and 22, respectively at points proximate the exterior of the housing 18. As sections 20 and 22 are joined, a semi-rectangular relief 59 is formed on the exterior of the housing 16 that runs along the joint between the housing sections. Excess adhesive 54 that is extruded from the joint fills the back of the semi-rectangular relief 59 thereby providing a clean assembly without a highly visible line of adhesive. The presence of the adhesive 54 between sections 20 and 22, in the semi-rectangular relief 59 and along the bead 56 inside the housing 18, creates a barrier that hermetically seals the interior of the housing 16. Once the adhesive 54 cures, a fluid impermeable seal is created between the sections 20 and 22 of the housing 18 without the use of a gasket. As a result, the housing sections can be joined in an efficient and economical manner.

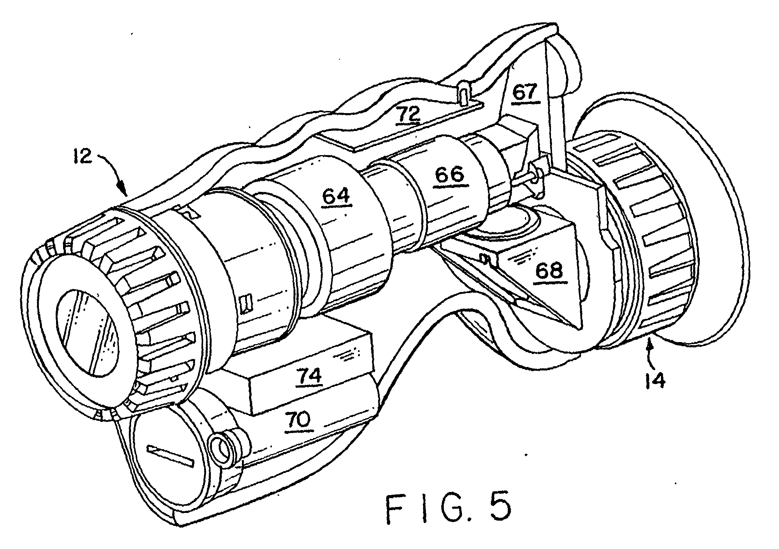

With reference now to FIG. 5, a preferred arrangement of electro-optical components within the interior of housing 18 will be observed. The electro-optical subassembly includes objective lens assembly 12, an image intensifier tube 64 for converting the infrared energy from the objective lens 12 into a visible image, a collimator lens assembly 66 for collimating the visible image, reflecting means in the form of a prism 67 for reflecting the collimated image, diopter cell assembly 68 which receives the reflected image and reflects the same, and eyepiece assembly 14 which receives the reflected image and allows the user to view the same. Also included within housing 18 is a battery housing assembly 70 which is dimensioned and arranged to receive the one or more batteries which will supply power to circuit board 72 via power supply module 74.

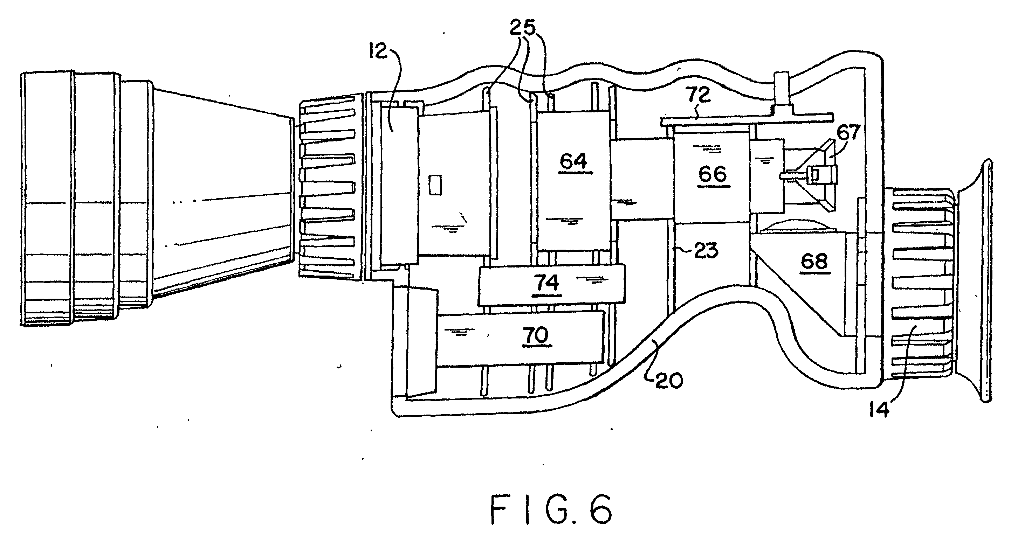

With reference now to both FIGS. 3 and 6, it will be seen that the location and contour of partitions 25 are selected to supporting the electro-optical components in a predetermined optical arrangement. For example, the partitions which support objective assembly 12 each have a semicircular recess dimensioned and arranged to define a support surface 25a for receiving and supporting sections of the objective lens assembly within the housing interior. To provide support for circuit board 72, partition 23 is notched to provide supporting surface 29. Section 22 has a similar notched partition 23' which defines a second supporting surface 29'. It will be readily ascertained by those skilled in the art that when the sections 20 and 22 are joined, circuit board 72 may be positioned as shown in FIG. 6 with a power control pushbutton 73 thereof extending through the housing.

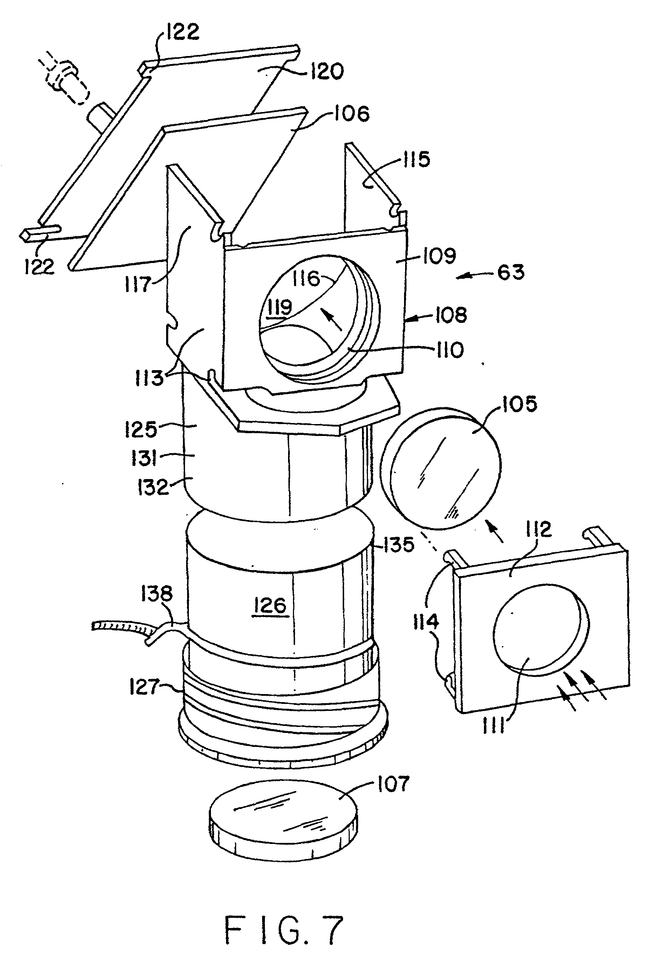

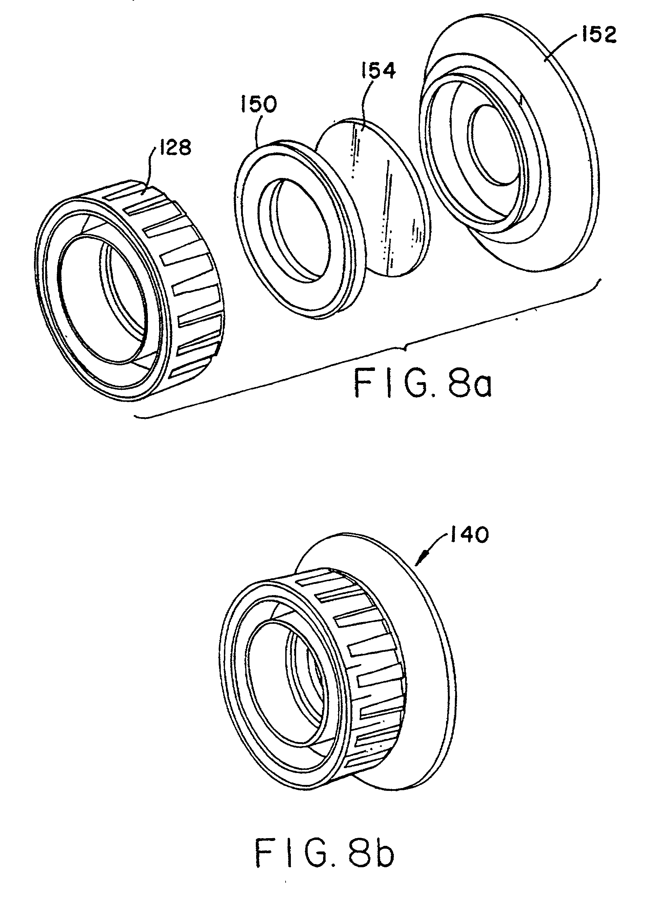

With reference now to FIGS. 7, 8a and 8b, the arrangement of the ocular and diopter assembly within the housing 18 of the present invention will now be described. Referring to FIG. 7, it can be seen that the diopter cell assembly is a snap-together assembly requiring no adhesives or mechanical fasteners. Light (designated by the arrows) entering the diopter cell assembly 68 passes through a first lens 105, where it is reflected 45° by a mirror 106 and redirected through an ocular lens 107. The first lens 105 and the mirror 106 are both connected to a common cell housing 108. The cell housing 108 has a face surface 109 through which an aperture 110 is formed. The aperture 110 has a stepped rim sized to accommodate the first lens 105. As a result, the first lens 105 can pass into, and become seated within, the aperture 110. A snap-on cover 112 connects to the cell housing 108 over the first lens 105. The cover 112 has an aperture 111 formed through it that is smaller than the diameter of the first lens 105. Consequently, when the cover 112 is joined to the cell housing 108, the first lens 105 becomes entrapped in a set position between the cover 112 and the cell housing 108. The aperture 111 in the cover 112 is positioned to enable light to pass into the first lens 105 and into the cell housing 108. Pawl receptacles 113 are formed on the cell housing 108 at points proximate the face surface 109. The cover 112 has locking pawls 114 that extend into and engage the pawl receptacles 113 on the cell housing 108, thereby interconnecting each of the two components with a snap fit.

Within the cell housing 108 a 45° sloped surface 116 extends between two side walls 117, 118. An aperture 119 is disposed in the sloped surface 116 at a position that aligns with the aperture 110 in the face surface 109 of the cell housing 108. A mirror 106 lays across the sloped surface 116 covering the aperture 119 in the sloped surface 116. The mirror 106 is held in one set position over the sloped surface 116 by a back plate 120. Projecting arms 122 extend from the four corners of the backplate 120. These projecting arms 122 engage notches 124 formed in the side walls 117, 118 as the back plate 120 passes between sidewalls 117, 118. The position of the notches 124 and the size of the back plate 120 correspond so that the back plate 120 engages the notches 124 with a slight interference fit, thereby enabling the projecting arms 122 to snap fit into the notches 124 and retain the back plate 120 in one set position. The back plate 120 biases the mirror 106 against the sloped surface 116, thereby retaining the mirror 106 over the aperture 119 in the sloped surface 116.

The mirror 106 directs light passing through the first lens 105 into the tubular region 125 of the cell housing 108. The tubular region 125 of the cell housing 108 is sized to be received within collar 126 and secured thereto by a suitable adhesive. Prior to insertion of tubular region 125 into collar 126, eye focus knob 128 (FIG. 8a) is positioned onto the collar. A strap retaining ring 138 is also positioned on collar 126. Ring 138 may be rotated 180° in either direction to accommodate a left or right handed user. A similar strap retaining ring is provided on the objective lens assembly (FIG. 11a). In order to provide controlled reciprocal movement of eye focus knob along collar 126, the respective components are threaded, with collar 126 having a threaded exterior portion 127 and focus knob 128 having a threaded bore extending therethrough. To prevent knob 128 from separating from collar 126 altogether, collar 126 is provided with a flange portion. With continued reference to FIG. 7, it can be seen that collar 126 is a tubular structure that is dimensioned to receive ocular lens 107.

As can be ascertained from Fig. 6, focus knob 128 can be moved to cause movement in the ocular lens 107. As knob 128 is moved back and forth in the directions of arrow 138, the sliding collar 126 and diopter assembly 68 is caused to move back and forth as an integral assembly within housing 18. This changes the position of the ocular lens 107 with respect to the other optical elements in the monoculars. Consequently, the movement of the ocular lens 107 acts as a focus adjustment, whereby the monocular device can be adjusted to suit either eye of the user. Turning now to FIGS. 8a and 8b, it will be seen that ocular assembly 140 comprises eye focus knob 128, and lens retaining ring 150. To provide comfort during use and shade the user's eyes from secondary light and during use of device 10, an elastomeric material in the form of an eyeshade 152 is seated within retaining ring 150. In order to increase the comfort of users who wear corrective eyeglasses, the eyeshade may be optionally provided with a prescription type lens (not shown) which accommodates the far distance or near distance prescription of the user.

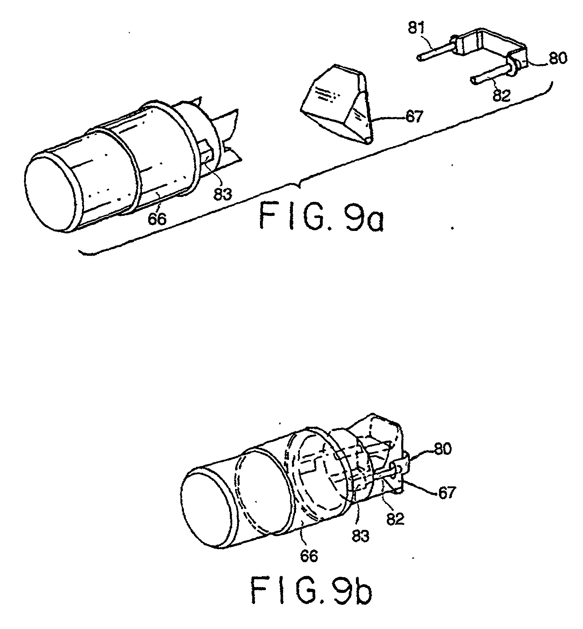

In the embodiment of FIG. 5, reflecting means is coupled to the collimator lens assembly 66 by a U-shaped bracket assembly 80, as shown in FIGS. 9a and 9b. As seen in FIG. 9a, the peripheral edge of the distal end of lens assembly 66 is recessed to receive beam splitter 67. Moreover, bracket member 80 includes two pin members 81 and 82 which are dimensioned and arranged to be received within corresponding apertures (not shown) in two flange members (of which only one of them, 83) is shown. After beam splitter 67 has been inserted in the manner shown in FIG. 9b, bracket 80 is positioned so that pin members 81 and 82 are seated within the apertures. Consequently, beamsplitter 67 is held in a predetermined set orientation. As such, by simply clamping the beam spiltter to lens assembly 66 using bracket member 80, the collimator lens assembly 66 and beam splitter 67 are properly optically aligned with the other optical elements within housing 16. Collimator lens assemblies for night vision devices are known devices as is exemplified by U.S. Patent No. 5,157,553 to Phillips entitled COLLIMATOR FOR A BINOCULAR VIEWING SYSTEM and assigned to ITT Corporation the assignee herein. This patent is incorporated herein by reference. The operative of collimator lens assemblies are well known.

Each housing half section 20 and 22 has a semicircular aperture, 21 and 23 respectively (FIG. 3) which align to form a full window aperture when the housings sections or halves are secured together. The aperture aligns with the objective lens assembly 12 allowing infrared energy to pass into the housing 18 and impinge upon the objective lens assembly 12. A protective window is positioned within the aperture through which the infrared energy passes. The window is secured to the housing 18 with a fluid impermeable seal or adhesive thereby preventing the flow of water into the housing 18 through the aperture. In a similar arrangement, a viewing aperture aligns with the diopter cell assemblies to provide the ocular viewing path. A light sensor (FIG. 5) is disposed within the housing 18. The light sensor senses light through an aperture in the housing 18. The complete aperture 69 is formed when sections 22 and 20 are joined. The aperture 69 is aligned along an axis parallel to the longitudinal axis or optical axis of the objective lens assembly 12. As such, the light sensor operates detect the intensity of radiant energy that is impinging upon the objective lens assembly 62. This enables one to operate circuitry to block or deactivate the image intensifier tube 64 for excessive light levels which could damage the screen of the tube. See for example, U.S. Patent No. 5,146,077 entitled "GATED VOLTAGE APPARATUS FOR HIGH UGHT RESOLUTION AND BRIGHT SOURCE PROTECTION OF IMAGE INTENSIFIER TUBE by Casert et al., issued on September 8,1992 and assigned to the assignee herein. That patent describes protection circuits as well as describing GEN II and GEN III image intensifier. A protective window covers the aperture 69 in a fluid impermeable manner, thereby protecting the light sensor and the interior of the housing 18 from moisture and other contaminants.

An image intensifier tube 64 interconnects with the distal end 85 of the collimator lens assembly 66. Although the image intensifier tube 64 can be of any type, in the preferred embodiment, the image intensifier tube is similar to a Generation II (GEN II) tube of a type manufactured by ITT Corporation, the assignee herein. In the shown embodiment, the image intensifier tube 64 has an elastomeric casing 86. The base structure 80 includes an enclosed tubular region 87 that has a diameter slightly smaller than the elastomeric casing 86 of the image intensifier tube 64. The elastomeric casing 86 of the image intensifier tube 64 passes into the enclosed tubular region 87 where it is retained by an interference fit. The lateral movement of the image intensifier tube 64 back and forth within the enclosed tubular region 87 is prevented by the interference fit and the abutment of the image intensifier tube 64 against the collimator lens assembly 66 and the sleeve 90 surrounding the objective lens assembly 62.

The operation of the electronic components contained within housing 18 is controlled by an on/off push button switch 28 that extends through an aperture defined by aligned semicircular recesses on the edges of upper section 18 and lower section 20 of housing 18.

Infrared or low intensity visible light is directed through the objective lens assembly 62 onto the image intensifier tube 64. The image intensifier tube 64 produces a visible image which is then directed to the collimator lens assembly 66. The brightness of the image produced by the image intensifier tube 64 may be controlled by manipulation of brightness control buttons (not shown). By depressing one of the brightness buttons, which may be of conventional construction, the gain of the image intensifier tube 64 can be increased or decreased, thereby increasing or decreasing the brightness of the image produced. Brightness controls for image intensifiers are well known. Since the image intensifier tube 64 is highly sensitive to light, a light sensor is also made part of the night vision binoculars assembly. The light sensor is coupled to a control circuit on the circuit board 38 that compares the detected light level to a threshold level and automatically turns off the image intensifier tube 64 should the threshold light level be surpassed.

The image produced by image intensifier tube 64 is directed through the collimator lens assembly 66 that reimages the image at a generally infinite conjugate. The conjugated image is then reflected by prism and directed toward the diopter cell assembly 68. The reflected image passes through the diopter cell assemblies where it is viewed and focused to the requirements of the user.

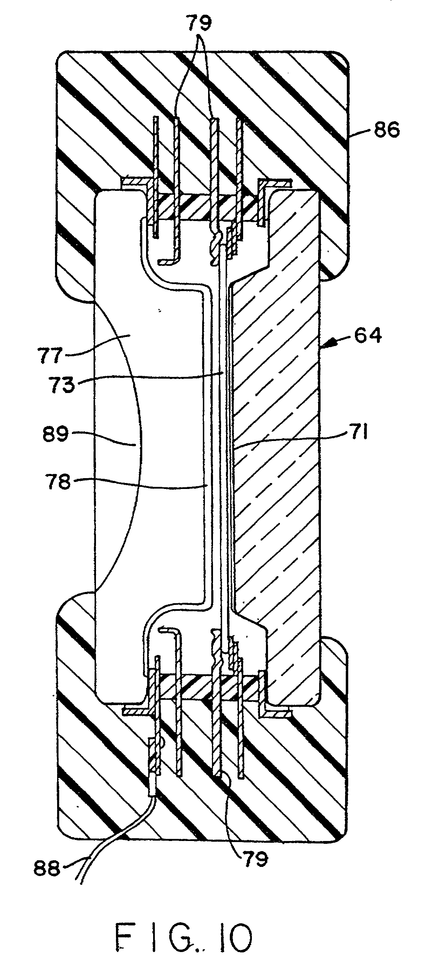

Referring to Fig. 10. a cross section of one preferred embodiment of the image intensifier tube 64 and its elastomeric casing 86 are shown. Although the image intensifier tube 64 can be of any known design, it is preferably a GEN II image intensifier tube. The operation of the GEN II image intensifier tube is known in the art. In the shown embodiment, the image intensifier tube 64 is a type of GEN II tube that has been modified to be produced at a much lower cost than typical GEN II tubes for military applications. The image intensifier tube 64 has a photocathode 71, microchannel plate 73, and a optical window 77 coated with a phosphor screen 78. To operate the image intensifier tube 64 various known electrical biases are applied to the photocathode 71, microchannel plate 73 and phosphor screen 78 to promote the flow of electrons from the photocathode 71 to the phosphor screen 78. In the prior art, electrical potentials were supplied to these components utilizing connector pins that extended into the evacuated housing of the image intensifier tube. Typically, the connector pins were disposed as far away form one another as possible to prevent any arcing from occurring between the various connector pins. In the shown embodiment, electrical bias is supplied to the photocathode 71, microchannel plate 73, and phosphor screen 78 via conductive annular flanges 79 that radially extend from the image intensifier tube 64. Wires 88 are then joined to the annular flanges 79 at the most convenient point and need not be directed to a single connector pin.

The elastomeric casing 86 that surrounds the image intensifier tube 64 is molded around the image intensifier tube 64. As such, the elastomeric material of the casing 86 fills the spaces between the various annular flanges 79. The elastomeric casing 86 therefore acts to encapsulate each of the annular flanges 79 and electrically isolates the annular flanges 79 from one another. The elastomeric casing 86 further acts to encapsulate the interconnection point between the various annular flanges 79 and wires 88, thereby deterring the wires 88 from detaching from the annular flange 79. The glass input and output plates as 78 and 77 are the same exact configuration with the exception of the domed portion 89. The annular connecting rings and the plate shape enable a inexpensive tube to be provided.

## Claims

1. A monocular night vision apparatus (10), comprising:
an objective lens subassembly (12) containing at least one first lens () therein; an image intensifier tube (64) for producing an intensified visible image from energy directed to said image intensifier tube through said objective lens subassembly;
a collimator subassembly (66) containing at least one second lens therein, said collimator subassembly (66) collimating the intensified image emanating from said image intensifier tube subassembly to produce a collimated image;
an eyepiece subassembly (14) containing at least one third lens therein for viewing said collimated image; and
an elongated housing (18) at least partially encasing said objective lens subassembly, said image intensifier tube, said collimator subassembly and said eyepiece subassembly, **characterized in that** said housing has first and second housing sections (20, 22) bonded together by a fluid impermeable adhesive seal (54) disposed between peripheral edge surfaces (46,48,49,50,51,52,57,58) of said housing sections, the first housing section having a first plurality of integral partitions (25) extending from the interior surface thereof, the second housing section having a second plurality of integral partitions (27) extending from the interior surface thereof, the partitions of the first housing section cooperating with corresponding partitions of the second housing section to define circular supporting surfaces which fixedly support said objective lens subassembly, said image intensifier tube, said collimator subassembly and said eyepiece subassembly in optical alignment with one another without the use of mechanical fasteners and without the need for alignment adjustments.

2. The apparatus according to Claim 1, further including
a diopter cell subassembly (68) for reflecting said collimated image to said eyepiece subassembly (14), said diopter cell subassembly having a cell housing, lenses and reflecting means that snap-together without adhesives or mechanical fasteners.

3. The apparatus according to Claim 1, wherein said collimator subassembly (66) includes
a first reflecting surface (67) that directs said collimated image from a first optical path to a second optical path and said eyepiece subassembly (14) includes a second reflecting surface for reflecting the collimated image from said second optical path to a third optical path.

4. The apparatus according to Claim 1, further including
a focusing means (127,128) for adjusting the position of an ocular lens (107) of said eyepiece lens subassembly relative to said image intensifier tube along a predetermined optical path.

5. The apparatus according to Claim 1, wherein
said objective lens subassembly (12) and said eyepiece lens subassembly (14) are disposed on differing optical paths.

6. The apparatus according to Claim 1 further including
strap accommodating means (138) mainly coupled in said housing (18) to enable a strap accommodated by said means to be selectively positioned with respect to said housing to accommodate a left or a right handed user.

7. The apparatus according to Claim 1, further including
a power supply module (74) that is fixedly supported within said housing by said partitions (25,27).

8. The apparatus according to Claim 1, wherein
said adhesive seal (54) is an epoxy.

9. The apparatus according to Claim 1, further including
a battery accommodating compartment (70) located in said housing.

10. The apparatus vision device according to Claim 1, wherein
said eyepiece assembly (14) is adjustable in focus.

11. The apparatus according to Claim 1, further including
a battery subhousing. (70) and a voltage regulator subassembly (74), wherein said battery subhousing and said voltage subassembly are fixedly supported within said housing by said partitions (25,27).

12. The apparatus according to Claim 1, wherein
said objective lens subassembly (12), said image intensifier tube and said collimator subassembly (66) are disposed on a first linear optical path and said eyepiece subassembly (14) is disposed on a different second optical path; and further including means contained within said housing for directing said collimated image from said first linear optical path to said second optical path.

13. The apparatus according to Claim 1, wherein
said adhesive seal (54) defines a bead on the interior surfaces of the housing sections.

14. The apparatus according to Claim 1, wherein
the peripheral edge surface of the first housing section (20) includes a peripheral projection (46) and the peripheral edge surface of the second housing (22) section includes a corresponding peripheral groove (50) which receives the peripheral projection.

15. The apparatus according to Claim 14, wherein
the peripheral projection divides the peripheral edge surface of the first housing section (20) into inner and outer edges surfaces (49, 48) which lie in different planes, the plane of the inner edge surface (49) being closer to the far end of the projection (46) than the plane of the outer edge surface(48).

16. The apparatus according to Claim 14 or 15, wherein
the groove (50) divides the peripheral edge surface of the second housing section (22) into inner and outer edges surfaces (52,51) which lie in different planes, the plane of the inner edge surface (52) being closer to the bottom of the groove (50) than the plane of the outer edge surface (51).

17. The apparatus according to Claim 16, wherein
said adhesive seal (54) fills a relief defined between the inner edge surfaces (49,50) of the first and second housing sections.

18. The apparatus according to Claim 17, wherein
said adhesive seal (54) also defines a bead on the interior surfaces of the housing sections.

## Patentansprüche

1. Ein monokulares Nachtsichtgerät (10), bestehend aus:
einer Objektivlinsenbaugruppe (12) mit mindestens einer ersten Linse, einer Bildverstärkerröhre (64) zur Lieferung eines verstärkten sichtbaren Bildes aus der zur Bildverstärkerröhre gerichteten Energie durch die Objektivlinsenbaugruppe;
einer Kollimatorbaugruppe (66) mit mindestens einer zweiten Linse, wobei die Kollimatorbaugruppe (66) das von der Bildverstärkerröhrenbaugruppe ausgestrahlte verstärkte Bild parallel richtet, um ein parallel gerichtetes Bild zu erhalten;
einer Okularbaugruppe (14) mit mindestens einer dritten Linse zur Betrachtung des parallel gerichteten Bildes;
und einem länglichen Gehäuse (18), das zumindest teilweise die Objektivlinsenbaugruppe, die Bildverstärkerröhre, die Kollimatorbaugruppe und die Okularbaugruppe umhüllt, **dadurch gekennzeichnet, daß**
das Gehäuse erste und zweite Gehäuseteile (20, 22) hat, die durch eine flüssige, undurchlässige Haftdichtung (54), die sich zwischen peripheren Kantenflächen (46, 48, 49, 50, 51, 52, 57, 58) befinden, fest miteinander verbunden sind, wobei das erste Gehäuseteil mehrere erste integrale Trennwände (25) hat, die sich von der Innenfläche erstrecken, und das zweite Gehäuseteil mehrere zweite integrale Trennwände (27) hat, die sich von der Innenfläche erstrecken, wobei die Trennwände des ersten Gehäuseteils mit entsprechenden Trennwänden des zweiten Gehäuseteils zusammenwirken, um kreisförmige Auflageflächen zu bilden, welche die Objektivlinsenbaugruppe, die Bildverstärkerröhre, die Kollimatorbaugruppe und die Okularbaugruppe in optischer Flucht zueinander festhält, und zwar ohne Verwendung von mechanischen Befestigungselementen und ohne daß die Ausrichtung eingestellt werden muß.

2. Die Vorrichtung nach Anspruch 1, die ferner umfaßt:
eine Dioptienzellenbaugruppe (68) zur Reflexion des parallel gerichteten Bildes auf die Okularbaugruppe (14), wobei die Dioptienzellenbaugruppe ein Zellengehäuse, Linsen und Reflexionsmittel hat, die ohne Klebstoffe oder mechanische Befestigungselemente ineinanderrasten.

3. Die Vorrichtung nach Anspruch 1, wobei die Kollimatorbaugruppe (66) eine erste Reflexionsfläche (67) umfaßt, die das parallel gerichtete Bild von einem ersten optischen Weg zu einem zweiten optischen Weg richtet, und wobei die Okularbaugruppe (14) eine zweite Reflexionsfläche umfaßt, die das parallel gerichtete Bild vom zweiten optischen Weg zu einem dritten optischen Weg reflektiert.

4. Die Vorrichtung nach Anspruch 1, die ferner umfaßt:
eine Fokussiereinrichtung (127, 128) zum Einstellen der Position einer Okularlinse (107) der Okularbaugruppe im Verhältnis zur Bildverstärkerröhre entlang einem vorbestimmten optischen Weg.

5. Die Vorrichtung nach Anspruch 1, wobei die Objektivlinsenbaugruppe (12) und die Okularbaugruppe (14) auf verschiedenen optischen Wegen angeordnet sind.

6. Die Vorrichtung nach Anspruch 1, die ferner umfaßt:
eine Einrichtung (138) zur Aufnahme eines Gurtes, die hauptsächlich mit dem Gehäuse (18) verbunden ist, damit ein Gurt, der von dieser Einrichtung aufgenommen wird, im Verhältnis zum Gehäuse so positioniert werden kann, daß er zu einem Links- oder Rechtshänder paßt.

7. Die Vorrichtung nach Anspruch 1, die ferner umfaßt:
ein Energiemodul (74), das innerhalb des Gehäuses von den Trennwänden (25, 27) festgehalten wird.

8. Die Vorrichtung nach Anspruch 1, wobei die Haftdichtung (54) ein Epoxidharz ist.

9. Die Vorrichtung nach Anspruch 1, die ferner umfaßt:
ein Fach (70) zur Aufnahme einer Batterie innerhalb des Gehäuses.

10. Die Sichtgerätvorrichtung nach Anspruch 1, wobei die Okularbaugruppe (14) eine Fokussiermöglichkeit aufweist.

11. Die Vorrichtung nach Anspruch 1, die ferner umfaßt:
ein integriertes Batteriegehäuse (70) und eine Spannungsreglerbaugruppe (74), wobei das integrierte Batteriegehäuse und die Spannungsreglerbaugruppe innerhalb des Gehäuses von den Trennwänden (25, 27) festgehalten werden.

12. Die Vorrichtung nach Anspruch 1, wobei die Objektivlinsenbaugruppe (12), die Bildverstärkerröhre und die Kollimatorbaugruppe (66) auf einem ersten linearen optischen Weg angeordnet sind und die Okularbaugruppe (14) auf einem verschiedenen zweiten optischen Weg angeordnet ist; wobei die Vorrichtung ferner eine Einrichtung innerhalb des Gehäuses zum Richten des parallel gerichteten Bildes vom ersten linearen optischen Weg zum zweiten optischen Weg umfaßt.

13. Die Vorrichtung nach Anspruch 1, wobei die Haftdichtung (54) an den Innenflächen der Gehäuseteile eine Wulst bildet.

14. Die Vorrichtung nach Anspruch 1, wobei die periphere Kantenfläche des ersten Gehäuseteils (20) einen peripheren Vorsprung (46) und die periphere Kantenfläche des zweiten Gehäuseteils (22) eine entsprechende periphere Nut (50) hat, die den peripheren Vorsprung aufnimmt.

15. Die Vorrichtung nach Anspruch 14, wobei der periphere Vorsprung die periphere Kantenfläche des ersten Gehäuseteils (20) in innere und äußere Kantenflächen (49, 48) teilt, die auf verschiedenen Ebenen liegen, wobei die Ebene der inneren Kantenfläche (49) näher am fernen Ende des Vorsprungs (46) liegt als die Ebene der äußeren Kantenfläche (48).

16. Die Vorrichtung nach Anspruch 14 oder 15, wobei die Nut (50) die periphere Kantenfläche des zweiten Gehäuseteils (22) in innere und äußere Kantenflächen (52, 51) teilt, die auf verschiedenen Ebenen liegen, wobei die Ebene der inneren Kantenfläche (52) näher am Boden der Nut (50) liegt als die Ebene der äußeren Kantenfläche (51).

17. Die Vorrichtung nach Anspruch 16, wobei die Haftdichtung (54) eine Aussparung zwischen den inneren Kantenflächen (49, 50) der ersten und zweiten Gehäuseteile ausfüllt.

18. Die Vorrichtung nach Anspruch 17, wobei die Haftdichtung (54) auch eine Wulst an den inneren Flächen der Gehäuseteile bildet.

## Revendications

1. Appareil monoculaire de vision nocturne (10), comprenant :
- un sous-ensemble de lentille objectif (12) contenant à l'intérieur au moins une première lentille ; un tube d'intensification d'image (64) pour produire une image visible intensifiée à partir de l'énergie dirigée vers ledit tube d'intensification d'image à travers ledit sous-ensemble de lentille objectif ;
- un sous-ensemble de collimateur (66) contenant à l'intérieur au moins une deuxième lentille, ledit sous-ensemble de collimateur (66) collimatant l'image intensifiée émanant dudit sous-ensemble de tube d'intensification d'image pour produire une image collimatée ;
- un sous-ensemble d'oculaire (14) contenant à l'intérieur au moins une troisième lentille pour observer ladite image collimatée ; et
- un boîtier allongé (18) qui enferme au moins partiellement ledit sous-ensemble de lentille objectif, ledit tube d'intensification d'image, ledit sous-ensemble de collimateur et ledit sous-ensemble d'oculaire,
**caractérisé en ce que** ledit boîtier comprend un premier et un deuxième tronçon de boîtier (20, 22) collés l'un à l'autre par un joint adhésif (54) imperméable aux fluides, disposé entre des surfaces de bordures périphériques (46, 48, 49, 50, 51, 52, 57, 58) desdits tronçons de boîtier, le premier tronçon de boîtier ayant une première pluralité de cloisons intégrées (25) s'étendant depuis sa surface intérieure, le deuxième tronçon de boîtier ayant une deuxième pluralité de cloisons intégrées (27) s'étendant depuis sa surface intérieure, les cloisons du premier tronçon de boîtier coopérant avec des cloisons correspondantes du deuxième tronçon de boîtier pour définir des surfaces de support circulaires qui supportent de façon fixe ledit sous-ensemble de lentille objectif, ledit tube d'intensification d'image, ledit sous-ensemble de collimateur et ledit sous-ensemble d'oculaire en alignement optique les uns avec les autres sans utilisation d'éléments de fixation mécaniques et sans nécessiter des ajustements d'alignement.

2. Appareil selon la revendication 1, comprenant en outre :
- un sous-ensemble de cellule à dioptre (68) pour réfléchir ladite image collimatée vers ledit sous-ensemble d'oculaire (14), ledit sous-ensemble de cellule à dioptre ayant un boîtier de cellule, des lentilles et des moyens de réflexion qui sont assemblés par encliquetage sans adhésif ni éléments de fixation mécaniques.

3. Appareil selon la revendication 1, dans lequel ledit sous-ensemble de collimateur (66) inclut :
- une première surface réfléchissante (67) qui dirige ladite image collimatée depuis un premier trajet optique vers un deuxième trajet optique, et ledit sous-ensemble d'oculaire (14) inclut une deuxième surface réfléchissante pour réfléchir une image collimatée depuis ledit deuxième trajet optique vers un troisième trajet optique.

4. Appareil selon la revendication 1, comprenant en outre en :
- des moyens de focalisation (127, 128) pour ajuster la position d'une lentille oculaire (107) dudit sous-ensemble de lentille oculaire par rapport audit tube d'intensification d'image le long d'un trajet optique prédéterminé.

5. Appareil selon la revendication 1, dans lequel :
- ledit sous-ensemble de lentille objectif (12) et ledit sous-ensemble d'oculaire (14) sont disposés sur des trajets optiques différents.

6. Appareil selon la revendication 1, comprenant en outre :
- des moyens de réception de sangle (138) principalement accouplés dans ledit boîtier (18) pour permettre à une sangle reçue par lesdits moyens d'être positionnée sélectivement par rapport audit boîtier pour s'accorder à un utilisateur gaucher ou droitier.

7. Appareil selon la revendication 1, comprenant en outre :
- un module de fourniture de puissance (74) qui est supporté fixement à l'intérieur dudit boîtier par lesdites cloisons (25, 27).

8. Appareil selon la revendication 1, dans lequel ledit joint adhésif (54) est un époxy.

9. Appareil selon la revendication 1, incluant en outre un compartiment de logement de batterie (7) situé dans ledit boîtier.

10. Appareil selon la revendication 1, dans lequel ledit sous-ensemble d'oculaire (14) est ajustable quant à son foyer.

11. Appareil selon la revendication 1, comprenant en outre un sous-boîtier de batterie (70) et un sous-ensemble de régulation de tension (74), dans lequel le ledit sous-boîtier de batterie et ledit sous-ensemble de régulateur de tension sont fixement supportés à l'intérieur dudit boîtier par lesdites cloisons (25, 27).

12. Appareil selon la revendication 1, dans lequel ledit sous-ensemble de lentille objectif (12), ledit tube d'intensification d'image et le ledit sous-ensemble de collimateur (66) sont disposés sur un premier trajet optique linéaire et ledit sous-ensemble d'oculaire (14) est disposé sur un deuxième trajet optique différent ; et comprenant en outre des moyens contenus à l'intérieur dudit boîtier pour diriger ladite image collimatée provenant dudit premier trajet optique linéaire vers le ledit deuxième trajet optique.

13. Appareil selon la revendication 1, dans lequel ledit joint adhésif (51) définit un bourrelet sur les surfaces intérieures des tronçons de boîtier.

14. Appareil selon la revendication 1, dans lequel la surface de bordure périphérique du premier tronçon de boîtier (20) inclut une projection périphérique (46) et la surface de bordure périphérique du deuxième tronçon de boîtier (22) inclut une gorge périphérique correspondante (50) qui reçoit la projection périphérique.

15. Appareil selon la revendication 14, dans lequel la projection périphérique divise la surface de bordure périphérique du premier tronçon de boîtier (20) en une surface de bordure intérieure et en une surface de bordure extérieure (40, 48) qui sont situées dans des plans différents, le plan de la surface de bordure intérieure (49) étant plus proche de l'extrémité distale de la projection (46) que le plan de la surface de bordure extérieure (48).

16. Appareil selon l'une ou l'autre des revendications 14 et 15, dans lequel la gorge (50) divise la surface de bordure périphérique du deuxième tronçon de boîtier (22) en une surface de bordure intérieure et en une surface de bordure extérieure (52, 51) qui sont situées dans des plans différents, le plan de la surface de bordure intérieure (52) étant plus proche du fond de la gorge (52) que le plan de la surface de bordure extérieure (51).

17. Appareil selon la revendication 16, dans lequel ledit joint adhésif (54) remplit un relief défini entre les surfaces de bordures intérieures (49, 50) du premier et du deuxième tronçon de boîtier.

18. Appareil selon la revendication 17, dans lequel ledit joint adhésif (54) définit également un bourrelet sur les surfaces intérieures des tronçons de boîtier.
